# EUROPÄISCHE PATENTSCHRIFT

(11) **EP 2 205 347 B1**
(45) Veröffentlichungstag und Bekanntmachung des Hinweises auf die Patenterteilung: **03.08.2011**
(21) Anmeldenummer: 08839183.4
(22) Anmeldetag: 11.10.2008
(51) Int. Cl.: B01J 3/00, B01J 3/03, C23C 14/54, C23C 14/56, B01J 19/22

(54) **SCHLEUSENVORRICHTUNG UND VERFAHREN ZUM ÖFFNEN DER SCHLEUSENVORRICHTUNG**
LOCK DEVICE AND METHOD FOR OPENING THE LOCK DEVICE
SYSTÈME DE SAS ET PROCÉDÉ POUR OUVRIR UN SYSTÈME DE SAS

(30) Priorität: 17.10.2007 DE 102007049669
(43) Veröffentlichungstag der Anmeldung: 14.07.2010
(73) Patentinhaber: SMS Siemag AG, 40237 Düsseldorf (DE)
(72) Erfinder: BEHRENS, Holger, 40699 Erkrath (DE); SOHL, Ralf-Hartmut, 42699 Solingen (DE); KÜMMEL, Lutz, 41363 Jüchen (DE)
(74) Vertreter: Klüppel, Walter
(86) Internationale Anmeldenummer: PCT/EP2008/010773
(87) Internationale Veröffentlichungsnummer: WO 2009/049921

(56) Entgegenhaltungen:
- EP-A- 0 289 195
- WO-A-2004/104264
- DE-A1- 19 960 751
- DE-A1-102004 007 831

## Beschreibung

### Technisches Gebiet

Die Erfindung betrifft eine Schleusenvorrichtung insbesondere für kontinuierlich in einen Prozessbereich ein und/oder auslaufendes endloses Bandmaterial, gemäß dem Oberbegriff von Anspruch 1. Darüber hinaus betrifft die Erfindung ein Verfahren zum Öffnen der Schleusenvorrichtung.

### Stand der Technik

Bei der Herstellung und Bearbeitung von Bandmaterial, insbesondere von Metallbändem in verschiedenen dazu vorgesehenen abgeschlossenen Raumbereichen werden bekannte Schleusenvorrichtungen verwendet, welche die Raumbereiche voneinander trennen, aber dennoch einen Transport des Bandmaterials in einen bzw. aus einem Raumbereich gestatten. In den Raumbereichen können unterschiedliche Prozessbedingungen vorherrschen, wie beispielsweise unterschiedliche Druckbedingungen. So kann beispielsweise in einem Raumbereich ein Vakuum vorherrschen und/oder in einem anderen Raumbereich kann Normaldruck oder eine gezielte Schutzgasatmosphäre bzw. Überdruck vorliegen.

Aus der älteren nicht vorveröffentlichten Anmeldung DE 10 2006 051 397 der Anmelderin ist eine Bandschleuse bekannt, welche zur Abdichtung zwischen zwei Raumbereichen Rollen verwendet. Auch ist aus der nicht vorveröffentlichten Anmeldung DE 10 2006 051 395 der Anmelderin eine Bandschleuse bekannt, welche als Dichtmittel zwischen zwei Räumen Blendenelemente einsetzt. Die DE 60 2004 001 403 T2 offenbart eine Dichtungsschleuse für eine Kammer zur Vakuumbeschichtung eines Bandes, bei welcher ein Gehäuse mit einem oberen Deckel und einem unteren Deckel versehen ist, wobei an dem oberen Deckel und an dem unteren Deckel Rollen angebracht sind, welche relativ zueinander in Bandrichtung versetzt sind und gegen das Band beaufschlagt sind, um dieses zu transportieren, wobei zwischen jeweils zwei Rollenpaaren jeweils eine Unterdruckkammer begrenzt ist.

Diese Schleusenvorrichtungen aus dem Stand der Technik haben den Nachteil, dass die Schleusenvorrichtungen im Wartungs- oder Reparaturfall aufwändig beispielsweise mit einem Hubkran, demontiert werden müssen und dass das Bandmaterial dabei nicht unverändert in der Schleuse verbleiben kann, weil ansonsten der untere und der obere Gehäusedeckel entweder nicht getrennt werden können oder zum Beispiel für Wartungszwecke nicht einfach zugänglich sind.

Somit erfordert eine Schleusenvorrichtung nach dem Stand der Technik eine sehr umständliche Handhabung der Schleusenvorrichtung und des durchgeführten endlosen Metallbandes.

### Darstellung der Erfindung, Aufgabe, Lösung, Vorteile

Es ist die Aufgabe der vorliegenden Erfindung, eine Schleusenvorrichtung zu schaffen, die bei der Verwendung oder Bearbeitung insbesondere von endlosem Bandmaterial insbesondere im Wartungs- oder Reparaturfall einfach zugänglich ist, wobei das Bandmaterial auch im Wartungs- oder Reparaturfall in der Schleusenvorrichtung verbleiben kann. Darüber hinaus besteht die Aufgabe darin, ein Verfahren zur Wartung einer entsprechenden Schleusenvorrichtung bereitzustellen.

Erfindungsgemäß wird die Aufgabe durch den Gegenstand des Patentanspruchs 1 gelöst. Demnach ist die Schleusenvorrichtung dadurch gekennzeichnet, dass mindestens eine ihrer Einzelschleusen aus zumindest einem ersten und einem zweiten Teil gebildet ist; dass eine lösbare Verbindung vorgesehen ist zwischen dem ersten und dem zweiten Teil zum Öffnen und Schließen der Einzelschleuse; und dass mindestens eine Vorrichtung vorgesehen ist zum Verlagem des ersten und zweiten Teils der Einzelschleuse relativ zueinander in oder entgegen der Transportrichtung des Bandmaterials bei geöffneter Verbindung.

Durch das beanspruchte Auseinanderfahren der beiden Teile entlang des Bandmaterials wird das Innere der Einzelschleuse großräumig zugänglich, zum Beispiel für Wartungsarbeiten, während gleichzeitig das Bandmaterial nicht entfernt werden muss.

Gemäß einem ersten Ausführungsbeispiel der Erfindung ist die Verbindung in Form eines Befestigungsmittels im Übergang zwischen einer seitlichen Wandung und dem Gehäusemantel angeordnet. Der erste Teil der Einzelschleuse besteht dann aus der einen seitlichen Wandung während der zweite Teil der Einzelschleuse den Gehäusemantel und die zweite seitlich Wandung umfasst.

Wenn die Einzelschleuse Bearbeitungs- oder Transportmittel und Antriebe für diese Mittel aufweist, die entweder an einer der seitlichen Wandungen oder an dem Gehäusemantel befestigt sind, so hat dies den Vorteil, dass sie dem ersten oder zweiten Teil der Einzelschleuse zugeordnet werden und zusammen mit diesen jeweiligen Teilen verfahren werden können.

An den Einzelschleusen ist üblicherweise eine externe Rohrverbindung angeschlossen zum Einstellen einer gewünschten Prozessbedingung, zum Beispiel eines bestimmten Druckverhältnisses innerhalb der Einzelschleuse. Grundsätzlich ist es dann vorteilhaft, wenn die Rohrverbindung entweder zusammen mit dem ersten oder zweiten Teil der Einzelschleuse, an welchen sie angeschlossen ist, mit verfahren werden kann. Alternativ ist es vorteilhaft, wenn die Rohrverbindung von dem entsprechenden Teil der Einzelschleuse zunächst gelöst werden kann, bevor dieser Teil verfahren wird.

Für ein Verfahren des ersten Teils und des zweiten Teils der Einzelschleuse relativ zueinander genügt es grundsätzlich, wenn einer der beiden Teile der Einzelschleuse mit Hilfe einer Vorrichtung zum Verlagern mobil ist. Der andere Teil der Einzelschleuse kann dann entweder feststehend, zum Beispiel fest an den Prozessbereich montiert sein oder er ist ebenfalls mit Hilfe einer weiteren Vorrichtung zum Verlagern verfahrbar.

Die Vorrichtung zum Verlagern kann entweder als fahrbares Untergestell oder als Gleiteinrichtung ausgebildet sein.

In dem Falle, dass die Schleusenvorrichtung als Schleusenkaskade mit einer Mehrzahl von hintereinander geschalteten Einzelschleusen ausgebildet ist, sollte mindestens eine dieser Einzelschleusen zweiteilig im Sinne der Erfindung mit einem ersten und einem zweiten Teil ausgebildet sein, die von einander lösbar sind. Die weiteren Einzelschleusen der Schleusenkaskade sind dann an den ersten oder zweiten Teil der zweiteiligen Einzelschleuse angeschlossen und dementsprechend dem ersten oder zweiten Teil zugeordnet und zusammen mit diesem verfahrbar.

Im Falle zweier benachbarter Einzelschleusen ist es vorteilhaft, wenn diese beiden Einzelschleusen in ihrem Übergangsbereich zueinander nicht jeweils eine separate seitliche Wandung, sondern stattdessen eine gemeinsame seitliche Wandung mit einer Schleusenöffnung für einen Übergang bzw. Durchgang des Schleusenmaterials von der einen Einzelschleuse in die andere aufweisen.

Die oben genannte Aufgabe der Erfindung wird weiterhin durch ein Verfahren zum Öffnen einer erfindungsgemäßen Schleusenvorrichtung gelöst. Die Vorteile dieses Verfahrens entsprechend den oben mit Bezug auf die Schleusenvorrichtung genannten Vorteilen.

Weitere vorteilhafte Ausgestaltungen der Schleusenvorrichtung und des Verfahrens sind Gegenstand der abhängigen Ansprüche.

Der Beschreibung sind insgesamt 6 Figuren beigefügt, wobei
- Figur 1: eine Anwendung der erfindungsgemäßen Schleusenvorrichtung;
- Figur 2: die erfindungsgemäße Schleusenvorrichtung in Form einer Schleu- senkaskade mit drei hintereinander geschalteten Einzelschleusen im geschlossenen Zustand;
- Figur 3: die erfindungsgemäße Schleusenvorrichtung mit drei Einzelschleu- sen, wobei jedoch die erste Einzelschleuse geöffnet ist;
- Figur 4: die erfindungsgemäße Schleusenvorrichtung mit drei Einzelschleu- sen, wobei jedoch die zweite Einzelschleuse geöffnet ist;
- Figur 5: die erfindungsgemäße Schleusenvorrichtung mit den drei Einzel- schleusen, wobei jedoch die dritte Einzelschleuse geöffnet ist; und
- Figur 6: einen Querschnitt durch eine Einzelschleuse in einer Ebene quer zur Transportrichtung des Bandmaterials

### zeigt.

Die Erfindung hat nachfolgend anhand von Ausführungsbeispielen unter Bezugnahme auf die genannten Figuren detailliert beschrieben.

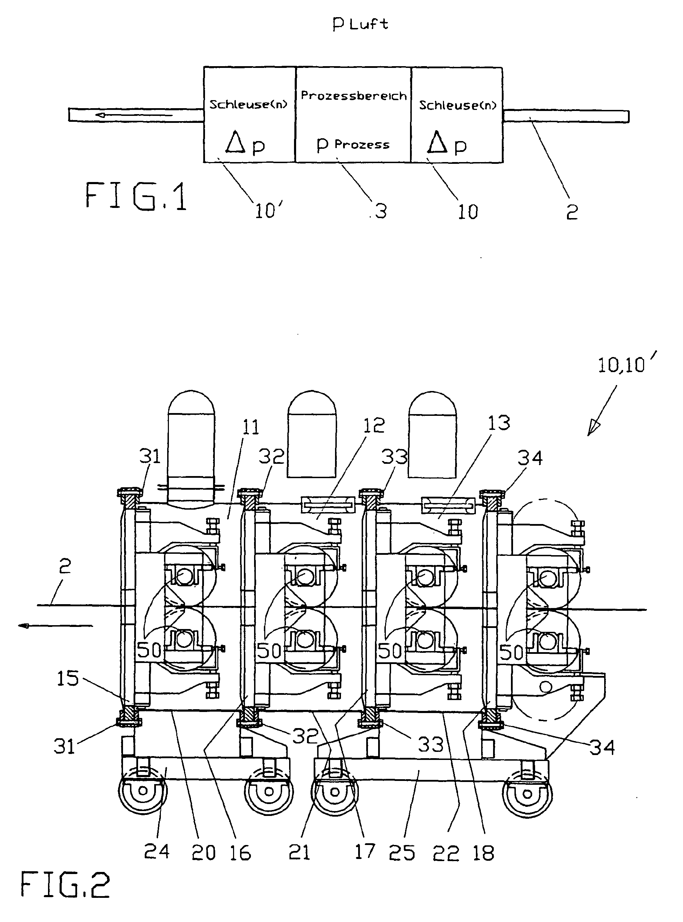

Figur 1 zeigt einen Prozessbereich 3 als abgeschlossenen Raumbereich, in welchem Bandmaterial unter vorgegebenen Prozessbedingungen p_{Prozess} bearbeitet wird. Bei den Prozessbedingungen kann es sich zum Beispiel um einen speziell eingestellten Druck, beispielsweise einen Unterdruck handeln. Demgegenüber herrscht außerhalb des Prozessbereiches 3 grundsätzlich Atmosphärendruck p_{Luft}. Bevor das Bandmaterial 2 in den eigentlichen Prozessbereich 3 eintritt wird es zunächst durch eine erste Schleusenvorrichtung 10 geleitet. Analog wird das Bandmaterial nach Bearbeitung in dem Prozessbereich 3 durch eine zweite Schleusenvorrichtung 10' geleitet, bevor es wieder den Atmosphärenbedingungen ausgesetzt wird. In den beiden Schleusenvorrichtungen 10, 10' wird jeweils ein Druckunterschied Δ p zwischen der Prozessbedingung in dem Prozessbereich 3 und dem äußeren Atmosphärendruck p_{Luft} gewährleistet. In dem das Bandmaterial 2 durch die beiden Schleusenvorrichtungen 10, 10' in den Prozessbereich 3 ein- bzw. ausgeführt wird, können die vorgegebenen Prozessbedingungen in dem Prozessbereich 3 aufrechterhalten werden.

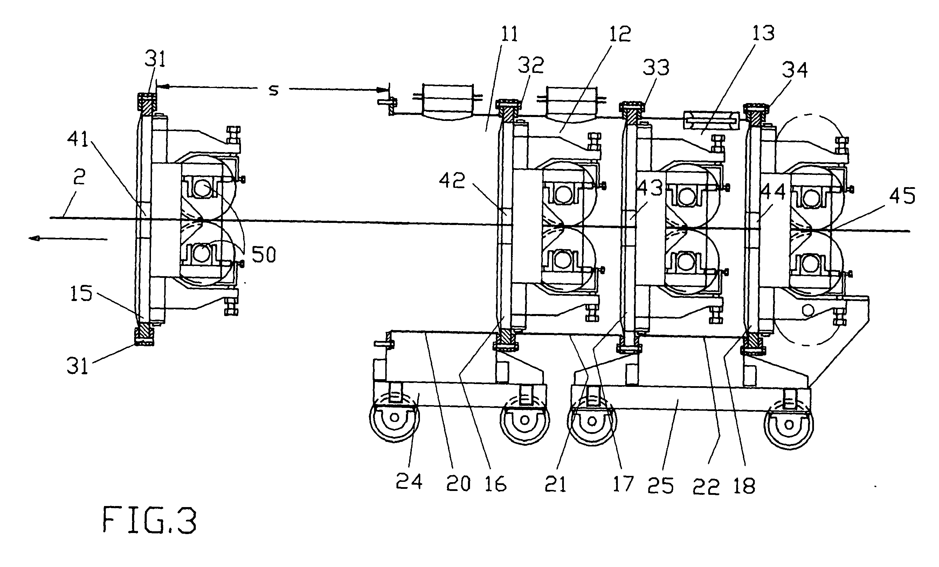

Figur 2 zeigt eine der Schleusenvorrichtungen 10, 10' gemäß der vorliegenden Erfindung. Die Schleusenvorrichtung 10, 10' besteht aus einer Mehrzahl von Einzelschleusen 11, 12, 13, wobei bei dem Ausführungsbeispiel gemäß Figur 2 ohne Beschränkung der Allgemeinheit drei Einzelschleusen 11, 12, 13 dargestellt sind. In der Praxis können auch mehr oder weniger Einzelschleusen vorhanden sein; es werden jedoch mindestens zwei hintereinander geschaltete Einzelschleusen vor und mindestens zwei hintereinander geschaltete Einzelschleusen nach dem eigentlichen Prozessbereich 3 gemäß Figur 3 benötigt. Jede der Einzelschleusen 11, 12, 13 ist durch jeweils zwei seitliche Wandungen 15, 16, 17, 18 und einen die Wandungen verbindenden Gehäusemantel 20, 21, 22 gebildet und begrenzt. Gemäß der Erfindung sind die Gehäusemäntel 20, 21, 22 vorteilhaft als umlaufend einteilig oder mehrteilig ausgebildet.

Bei dem Ausführungsbeispiel gemäß Figur 2 sind die Gehäusemäntel mit Verbindungen 31, 32, 33, 34 in Form von Befestigungsmitteln an den jeweils seitlich benachbarten Wandungen 15, 16, 17, 18 lösbar befestigt. Bei geschlossener Verbindung werden die Gehäusemäntel über diese Verbindungen von den seitlichen Wandungen getragen.

Schließlich sind in Figur 2 Transport- oder Bearbeitungsrollen 50 zu erkennen zum Transportieren oder Bearbeiten des Bandmaterials 2. Diese Rollen sind beispielhaft jeweils an einer seitlichen Wandung 15, 16, 17, 18 befestigt.

Das Bandmaterial 2 wird in Figur 2 in Pfeilrichtung transportiert.

In Figur 3 ist zu erkennen, dass die Verbindung 31 der ersten Einzelschleuse 11 am Übergang zwischen der seitlichen Wandung 15 und dem Gehäusemantel 20 geöffnet ist. Die seitliche Wandung 15 bildet in diesem Fall zusammen mit den an ihr befestigten Transport- oder Bearbeitungsrollen 50 einen ersten Teil der ersten Einzelschleuse 11. Dieser erste Teil kann zum Beispiel an dem sich links, das heißt in Transportrichtung des Bandes 2 anschließenden Prozessbereich 3 montiert und von diesem getragen sein. Demgegenüber bildet der Gehäusemantel 20 zusammen mit der rechten seitlichen Wandung 16 einen zweiten Teil der ersten Einzelschleuse 11. Diesem zweiten Teil zugeordnet sind die weiteren Einzelschleusen 12 und 13 jeweils mit ihren Transport- und Bearbeitungsrollen 50. Gemäß dem in Figur 3 gezeigten Ausführungsbeispiel sind der zweite Teil der ersten Einzelschleuse 11 sowie die fest damit verbundenen weiteren Einzelschleusen 12 und 13 mit Hilfe von Vorrichtungen 24, 25 zum Verlagern lateral in oder entgegen der Transportrichtung des Bandmaterials 2 verfahrbar; auch in Figur 3 ist die Transportrichtung des Bandes mit einem Pfeil nach links gekennzeichnet.

In Figur 3 ist der zweite Teil mit den zugehörigen weiteren Einzelschleusen 12 und 13 um den Weg S gegenüber dem ortsfest angeordneten ersten Teil der Einzelschleuse 12 entgegen der Transportrichtung des Bandes verfahren. Durch die Separierung der beiden Einzelteile ist die Einzelschleuse 11 geöffnet und ihr Innenraum und insbesondere die Transport- und Bearbeitungsrollen 50 sind so insbesondere zu Wartungszwecken leicht zugänglich. Das Bandmaterial 2 ist durch Schleusenöffnungen 41, 42, 43, 44, 45 in jeder der seitlichen Wandungen 15, 16, 17, 18 geführt. Erfindungsgemäß erfolgt die Verschiebung des ersten Teils der Einzelschleuse relativ zu dem zweiten Teil der Einzelschleuse jeweils entlang des Bandmaterials, das heißt in oder entgegen der Transportrichtung des Bandmaterials, so dass dieses bei dem Verfahren der beiden Teile relativ zueinander nicht entfernt werden muss.

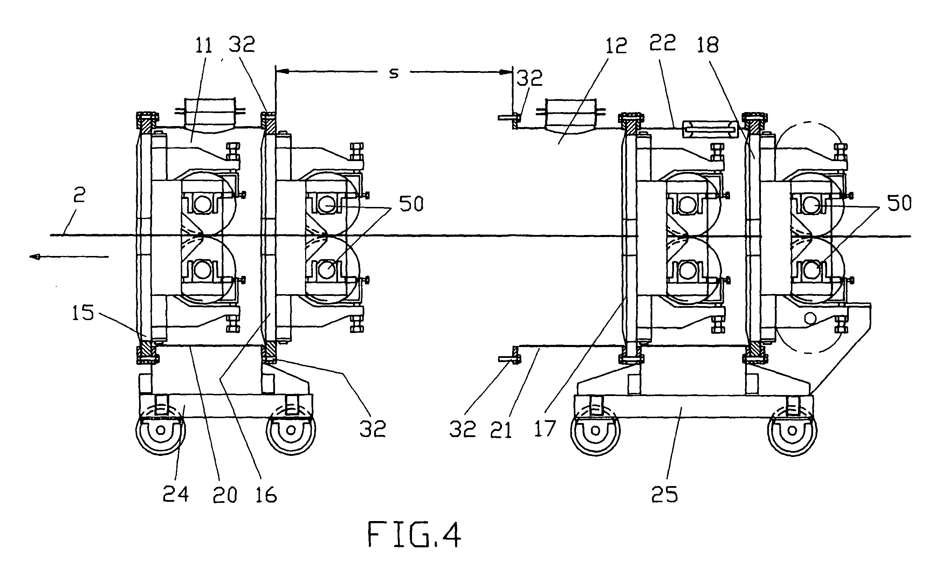

Figur 4 zeigt ein zweites Ausführungsbeispiel der erfindungsgemäßen Schleusenvorrichtung, wobei nicht die erste Einzelschleuse 11, sondern die zweite Einzelschleuse 12 durch lösen der Verbindung 32 geöffnet ist. Der erste Teil der zweiten Einzelschleuse wird jetzt gebildet aus der seitlichen Wandung 16 und den daran montierten Transport- und Bearbeitungsrollen 50. Dem ersten Teil der zweiten Einzelschleuse zugeordnet ist die daran fest montierte Einzelschleuse 11 insbesondere mit ihrem Gehäusemantel 20 und ihrer linken seitlichen Wandung 15. Der zweite Teil der zweiten Einzelschleuse wird gebildet durch ihren Gehäusemantel 21 und ihre recht seitliche Wandung 17. Diesem zweiten Teil zugeordnet ist die dritte Einzelschleuse 13 mit ihrem Gehäusemantel 22, ihrer rechten seitlichen Wandung 18 sowie mit den an diesen beiden Wandungen befestigten Transport- und/oder Bearbeitungsrollen 50.

Im Unterschied zu dem ersten Ausführungsbeispiel gemäß Figur 3 sind nun bei dem zweiten Ausführungsbeispiel beide Teile der zweiten Einzelschleuse mit ihren jeweils zugeordneten weiteren Einzelschleusen unabhängig voneinander verfahrbar. Dies wird dadurch realisiert, dass dem ersten Teil der zweiten Einzelschleuse sowie der zugeordneten ersten Einzelschleuse 11 die Verfahrvorrichtung 24 zugeordnet ist, während dem zweiten Teil der Einzelschleuse sowie den zugeordneten weiteren Einzelschleusen die Verfahrvorrichtung 25 zugeordnet ist. In Figur 4 sind die beiden Teile der zweiten Einzelschleuse 12 sowie ihre jeweils zugeordneten weiteren Einzelschleusen um den Verfahrweg S gegeneinander entlang der Transportrichtung des Bandmaterials 2 verfahren.

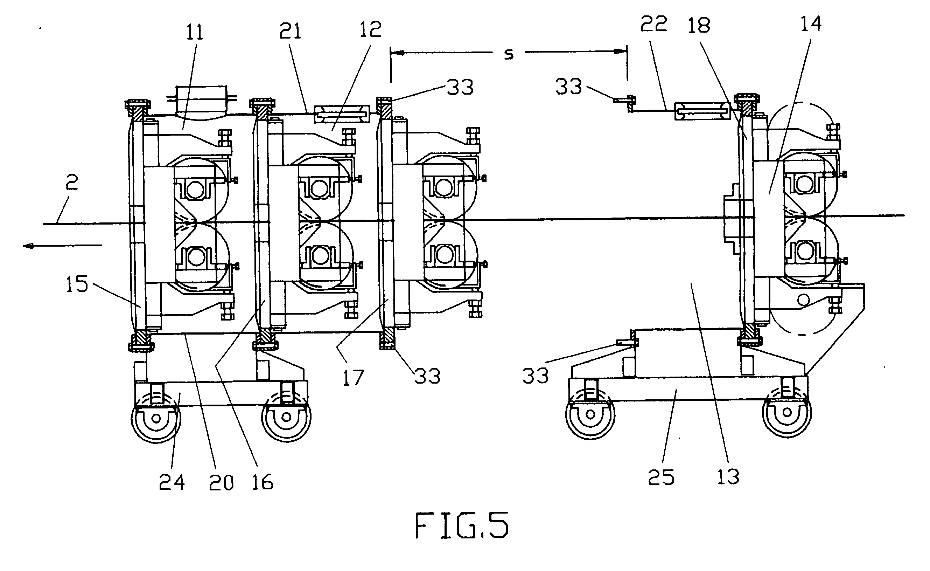

Figur 5 zeigt ein drittes Ausführungsbeispiel für die erfindungsgemäße Schleusenvorrichtung, wobei im Unterschied zu Figur 4 nicht die zweite, sondern die dritte Einzelschleuse 13 an der Verbindung 33 geöffnet wurde.

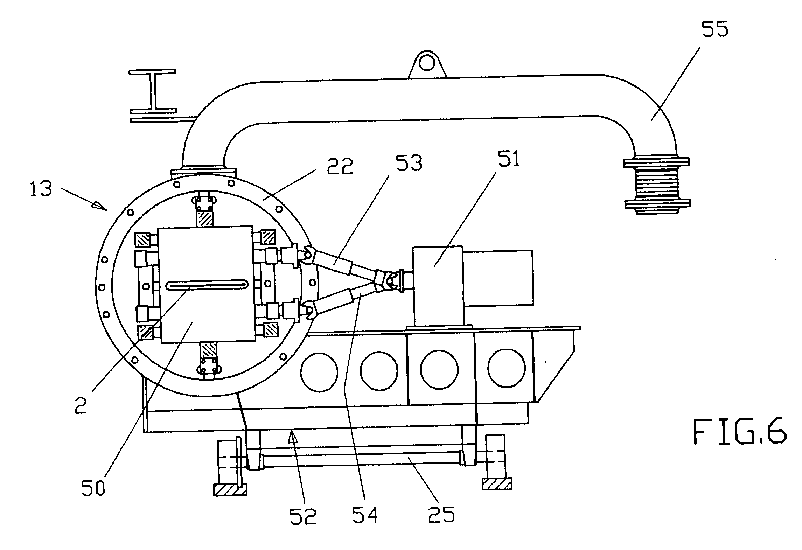

Figur 6 zeigt einen Querschnitt durch eine der Einzelschleusen auf Höhe der Transport- oder Bearbeitungsrollen 50 quer zur Transportrichtung des Bandmaterials, welche senkrecht auf der Zeichenebene steht. Es ist die Einzelzschleuse 13 zu erkennen mit ihrem Gehäusemantel 22, der hier beispielhaft rohrförmig ausgebildet ist. Im Innern der Einzelschleuse 13 sind die Transport- oder Bearbeitungsrollen 50 zu erkennen, welche oberhalb und unterhalb des Bandmaterials 2 angeordnet sind. Diese Rollen können über Verbindungswellen 53, 54 von einem Antrieb 51 angetrieben werden. Sowohl die Einzelschleuse 13 wie auch der Antrieb 51 sind auf einer Trägereinheit 52 angeordnet, welche mit Hilfe der Vorrichtung 25 in oder entgegen der Transportrichtung des Bandes verfahren werden können. Alternativ zu der Darstellung in Figur 6 kann der Antrieb 51 auch außerhalb der Trageinheit 52 angeordnet sein; dann ist es erforderlich, dass dieser von den Transport- oder Bearbeitungsrollen gelöst wird, bevor die Einzelschleuse mit der Vorrichtung 25 verfahren wird.

Gemäß Figur 6 ist an der Oberseite des Gehäusemantels 22 eine Rohrverbindung 55 angeschlossen. Diese Rohrverbindung dient zum Beispiel als Absaugvorrichtung zum erzeugen eines Unterdrucks bzw. eines Vakuums im Innern der Einzelschleuse 13. Diese Rohrverbindung ist vorzugsweise so ausgebildet, dass sie zusammen mit der Einzelschleuse 13 verfahren werden kann; dann braucht die Rohrverbindung 55 nicht von dem Gehäusemantel 22 gelöst zu werden, wenn die Einzelschleuse 13 verfahren werden soll. Alternativ kann die Verbindung zwischen der Rohrverbindung 55 und dem Gehäusemantel 22 jedoch auch lösbar ausgebildet sein; dann wäre die Einzelschleuse 13 zusammen mit den ihr eventuell zugeordneten anderen Teilen der Schleusenvorrichtung 10, 10' unabhängig von der Rohrverbindung 55 verfahrbar.

Vorteilhaft an der erfindungsgemäßen Schleusenvorrichtung ist die Möglichkeit zum Öffnen der Einzelschleusen und zum Verschieben der durch das Öffnen gebildeten Teile bzw. Segmente mit Hilfe der Vorrichtungen 24, 25 zum Verlagern derselben. Auf diese Weise wird der Innenraum der Einzelschleusen und insbesondere die darin eventuell befindlichen Transport- oder Bearbeitungsrollen zum Beispiel für Wartungszwecke zugänglich. Das Öffnen der Einzelschleusen muss nicht auf eine einzelne Schleuse beschränkt sein, sondern kann entweder nach und nach, das heißt zeitlich suggestive oder aber auch gleichzeitig bei allen Einzelschleusen der Schleusenvorrichtung erfolgen. Je mehr Einzelschleusen jedoch gleichzeitig geöffnet werden sollen, desto mehr Platz ist jedoch dazu erforderlich.

### Bezugszeichenliste

- 2: Bandmaterial
- 3: Prozessbereich
- 10: Schleusenvorrichtung
- 10': Schleusenvorrichtung
- 11: Einzelschleuse
- 12: Einzelschleuse
- 13: Einzelschleuse
- 15: Wandung
- 16: Wandung
- 17: Wandung
- 18: Wandung
- 19: Wandung
- 20: Gehäusemantel
- 21: Gehäusemantel
- 22: Gehäusemantel
- 24: Rollenvorrichtung, Vorrichtung zur Verlagerung
- 25: Rollenvorrichtung, Vorrichtung zur Verlagerung
- 41: Schleusenöffnung
- 42: Schleusenöffnung
- 43: Schleusenöffnung
- 44: Schleusenöffnung
- 45: Schleusenöffnung
- 50: Transport- oder Bearbeitungsrollen
- 51: Antrieb
- 52: Trägereinheit
- 53: Verbindungswelle
- 54: Verbindungswelle
- 55: Rohrverbindung

## Patentansprüche

1. Schleusenvorrichtung (1, 4, 5, 10) mit mindestens einer Einzelschleuse (11) zum Durchführen von Bandmaterial;
**dadurch gekennzeichnet,**
**dass** die Einzelschleuse (11) aus zumindest einem ersten und einem zweiten Teil gebildet ist;
**dass** eine lösbare Verbindung vorgesehen ist zwischen dem ersten und dem zweiten Teil zum Öffnen und Schließen der Einzelschleuse; und dass mindestens eine Vorrichtung (24, 25) vorgesehen ist zum Verlagern des ersten und zweiten Teils der Einzelschleuse (11) relativ zueinander in oder entgegen der Transportrichtung des Bandmaterials (2) bei geöffneter Verbindung.

2. Schleusenvorrichtung (1, 4, 5, 10) nach Anspruch 1,
**dadurch gekennzeichnet,**
**dass** das Gehäuse der Einzelschleuse (11) aus einer ersten seitlichen Wandung (16) mit einer Schleusenöffnung (42) für den Eintritt des Bandmaterials (2) in die Einzelschleuse, einer zweiten seitlichen Wandung (15) mit einer Schleusenöffnung (41) für den Austritt des Bandmaterials (2) aus der Einzelschleuse (11) und einem Gehäusemantel (20) zwischen der ersten und der zweiten Wandung (15) besteht.

3. Schleusenvorrichtung (1, 4, 5, 10) nach Anspruch 2,
**dadurch gekennzeichnet,**
**dass** der erste Teil der Einzelschleuse (11) zumindest einen Teil der ersten seitlichen Wandung (16) mit der Schleusenöffnung (42) für den Eintritt des Bandmaterials (2) aufweist; und
**dass** der zweite Teil der Einzelschleuse (11) zumindest einen Teil der zweiten seitlichen Wandung (15) mit der Schleusenöffnung (41) für den Austritt des Bandmaterials (2) aufweist.

4. Schleusenvorrichtung (1, 4, 5, 10) nach Anspruch 2 oder 3,
**dadurch gekennzeichnet,**
**dass** der erste oder zweite Teil oder beide Teile der Einzelschleuse (11, 12, 13) zumindest einen Teil des Gehäusemantels (20) aufweisen.

5. Schleusenvorrichtung (1, 4, 5, 10) nach einem der Ansprüche 2 bis 4, **dadurch gekennzeichnet,**
**dass** die Einzelschleuse (11, 12, 13) Bearbeitungs- oder Transportmittel (50) für das Bandmaterial, wie beispielsweise Bearbeitungs- oder Transportrollen, und Antriebe (51) für diese Mittel aufweist, wobei die Mittel oder die Antriebe die an der ersten oder zweiten seitlichen Wandung (15, 16) oder an dem Gehäusemantel (20) befestigt sind; und
**dass** diese Mittel und Antriebe - vorzugsweise entsprechend der seitlichen Wandung (15, 16) oder dem Gehäusemantel (20), an dem sie befestigt sind - entweder dem ersten oder zweiten Teil der Einzelschleuse (11, 12, 13) zugeordnet und mit diesem verlagerbar sind.

6. Schleusenvorrichtung (1, 4, 5, 10) nach einem der Ansprüche 2 bis 5, **dadurch gekennzeichnet,**
**dass** eine Rohrverbindung (55) von außen an den Gehäusemantel (23) angeschlossen ist zum Einstellen eines gewünschten Drucks im Innern der Einzelschleuse (11); und
**dass** die Rohrverbindung (55) - entsprechend dem Teil des Gehäusemantels, an dem sie angeschlossen ist - entweder dem ersten oder zweiten Teil der Einzelschleuse (11, 12, 13) zugeordnet ist und zusammen mit diesem verlagerbar ist.

7. Schleusenvorrichtung (1, 4, 5, 10) nach einem der Ansprüche 2 bis 5, **dadurch gekennzeichnet,**
**dass** eine Rohrverbindung (55) lösbar von außen an den Gehäusemantel (23) angeschlossen ist zum Einstellen eines gewünschten Drucks im Innern der Einzelschleuse; und
**dass** die Rohrverbindung (55), wenn sie von dem Gehäusemantel (23) abgekoppelt ist, unabhängig von dem ersten oder zweiten Teil der Einzelschleuse (11, 12, 13) insbesondere in oder entgegen der Transportrichtung des Bandmaterials (2) verlagerbar ist.

8. Schleusenvorrichtung (1, 4, 5, 10) nach einem der vorangegangenen Ansprüche,
**dadurch gekennzeichnet,**
**dass** eine erste Vorrichtung (24) zum Verlagern vorgesehen ist zum Verlagern des ersten Teils der Einzelschleuse (11, 12, 13) und eine zweite Vorrichtung (25) zum Verlagern vorgesehen ist zum Verlagern des zweiten Teils.

9. Schleusenvorrichtung (1, 4, 5, 10) nach einem der vorangegangenen Ansprüche,
**dadurch gekennzeichnet,**
**dass** die Vorrichtung (24, 25) zum Verlagern als fahrbares Untergestell oder als Gleiteinrichtung ausgebildet ist.

10. Schleusenvorrichtung (1, 4, 5, 10) (1, 4, 5, 10) in Form einer Schleusenkaskade mit einer Mehrzahl von in Transportrichtung des Bandmaterials (2) hintereinander geschalteten Einzelschleusen (11, 12, 13), wobei zumindest eine der Einzelschleusen (11) zweiteilig mit einem ersten und zweiten Teil ausgebildet ist nach einem der vorangegangenen Ansprüche, und wobei die anderen Einzelschleusen (12, 13) an den ersten oder zweiten Teil der zweiteiligen Einzelschleuse (11) angeschlossen sind und dementsprechend dem ersten oder zweiten Teil zugeordnet und zusammen mit diesem verlagerbar sind.

11. Schleusenvorrichtung (1, 4, 5, 10) nach Anspruch 10,
**dadurch gekennzeichnet,**
**dass** zwei benachbarte Einzelschleusen (11, 12) eine gemeinsame seitliche Wandung (16) mit einer Schleusenöffnung (42) für einen Übergang des Bandmaterials (2) von der einen Einzelschleuse (12) in die andere aufweisen.

12. Verfahren zum Öffnen einer Schleusenvorrichtung (1, 4, 5, 10) mit mindestens einer Einzelschleuse (11) zum Durchführen von Bandmaterial; **gekennzeichnet durch** folgende Schritte:
Öffnen der Einzelschleuse (11) **durch** Lösen einer Verbindung zwischen einem ersten und einem zweiten Teil der Einzelschleuse; und
Verlagern des ersten und zweiten Teils der Einzelschleuse (11) relativ zueinander in oder entgegen der Transportrichtung des Bandmaterials (2).

13. Verfahren nach Anspruch 12,
**dadurch gekennzeichnet,**
**dass** der erste Teil der Einzelschleuse (11) zumindest einen Teil der ersten seitlichen Wandung (16) mit der Schleusenöffnung (42) für den Eintritt des Bandmaterials (2) aufweist; dass der zweite Teil der Einzelschleuse (11) zumindest einen Teil der zweiten seitlichen Wandung (15) mit der Schleusenöffnung (41) für den Austritt des Bandmaterials (2) aufweist; und dass der erste und/oder der zweite Teil der Einzelschleuse (11, 12, 13) beim Öffnen und Schließen der Einzelschleuse (11, 12, 13) entlang des Bandmaterials (2) verschoben werden, während das Bandmaterial (2) durch die Schleusenöffnungen geführt ist.

14. Verfahren nach Anspruch 12 oder 13,
**dadurch gekennzeichnet,**
**dass** der erste Teil und der zweite Teil der Einzelschleuse (11) nach Abschluß von Wartungsarbeiten wieder entlang des Bandmaterials (2) zusammen geschoben und miteinander verbunden werden.

## Claims

1. Lock device (1, 4, 5, 10) with at least one individual lock (11) for the passage of strip material, **characterised in that** the individual lock (11) is formed from at least one first part and second part, that a releasable connection is provided between the first and the second part for opening and closing the individual lock and that at least one device (24, 25) is provided for displacing the first and second parts of the individual lock (11) relative to one another in or against the transport direction of the strip material (2) when the connection is open.

2. Lock device (1, 4, 5, 10) according to claim 1, **characterised in that** the housing of the individual lock (11) consists of a first side wall (16) with a lock opening (42) for entry of the strip material (2) into the individual lock, a second side wall (15) with a lock opening (41) for exit of the strip material (2) from the individual lock (11) and a housing casing (20) between the first and the second wall (15).

3. Lock device (1, 4, 5, 10) according to claim 2, **characterised in that** the first part of the individual lock (11) comprises at least a part of the first side wall (16) with the lock opening (42) for entry of the strip material (2) and that the second part of the individual lock (11) comprises at least a part of the second side wall (15) with the lock opening (41) for exit of the strip material (2).

4. Lock device (1, 4, 5, 10) according to claim 2 or 3, **characterised in that** the first or second part or both parts of the individual lock (11, 12, 13) comprises or comprise at least a part of the housing casing (20).

5. Lock device (1, 4, 5, 10) according to any one of claims 2 to 4, **characterised in that** the individual lock (11, 12, 13) comprises processing or transport means (50) for the strip material, such as, for example, processing or transport rollers, and drives (51) for these means, wherein the means or the drives are fastened to the first or second side wall (15, 16) or to the housing casing (20), and that these means or drives are associated, preferably in correspondence with the side wall (15, 16) or the housing casing (20) to which they are fastened, either with the first or the second part of the individual lock (11, 12, 13) and are displaceable therewith.

6. Lock device (1, 4, 5, 10) according to any one of claims 2 to 5, **characterised in that** a pipe connection (55) for setting a desired pressure in the interior of the individual lock (11) is connected from the outside with the housing casing (23) and that the pipe connection (55) is associated, in correspondence with the part of the housing casing with which it is connected, with either the first second part of the individual lock (11, 12, 13) and is displaceable together therewith.

7. Lock device (1, 4, 5, 10) according to any one of claims 2 to 5, **characterised in that** a pipe connection (55) for setting a desired pressure in the interior of the individual lock is detachably connected from the outside with the housing casing (23) and that the pipe connection (55) when uncoupled from the housing casing (23) is displaceable independently of the first or second part of the individual lock (11, 12, 13) in particular in or against the transport direction of the strip material (2).

8. Lock device (1, 4, 5, 10) according to any one of the preceding claims, **characterised in that** a first device (24) for displacing is provided for displacing the first part of the individual lock (11, 12, 13) and a second device (25) for displacing is provided for displacing the second part.

9. Lock device (1, 4, 5, 10) according to any one of the preceding claims, **characterised in that** the device (24, 25) for displacing is constructed as a movable subframe or as a slide device.

10. Lock device (1, 4, 5, 10) in the form of a lock cascade with a plurality of individual locks (11, 12, 13) connected in succession in the transport direction of the strip material (2), wherein at least one of the individual locks (11) is of two-part construction with a first and second part, according to any one of the preceding claims, and wherein the other individual locks (12, 13) are connected with the first or second part of the two-part individual lock (11) and accordingly associated with the first or second part and displaceable together therewith.

11. Lock device (1, 4, 5, 10) according to claim 10, **characterised in that** two adjacent individual locks (11, 12) have a common side wall (16) with a lock opening (42) for transfer of the strip material (2) from one individual lock (12) to the other.

12. Method of opening a lock device (1, 4, 5, 10) with at least one individual lock (11) for the passage of strip material, **characterised by** the following steps: opening the individual lock (11) by releasing a connection between a first part and a second part of the individual lock and displacing the first and second parts of the individual lock (11) relative to one another in or against the transport direction of the strip material (2).

13. Method according to claim 12, **characterised in that** the first part of the individual lock (11) comprises at least a part of the first side wall (16) with the lock opening (42) for entry of the strip material (2), that the second part of the individual lock (11) comprises at least a part of the second side wall (15) with the lock opening (41) for exit of the strip material (2) and that the first and/or second part of the individual lock (11, 12, 13) when the individual lock (11, 12, 13) is opened and closed is or are displaced along the strip material (2) whilst the strip material (2) is guided through the lock openings.

14. Method according to claim 12 or 13, **characterised in that** the first part and the second part of the individual lock (11) after termination of maintenance operations are pushed together again along the strip material (2) and connected with one another.

## Revendications

1. Dispositif de passage (1, 4, 5, 10) comprenant au moins un sas individuel (11) que doit traverser une matière en forme de bande ;
**caractérisé**
**en ce que** le sas individuel (11) est constitué par au moins une première et une deuxième partie ;
**en ce qu'**on prévoit une liaison amovible entre la première et la deuxième partie pour l'ouverture et la fermeture du sas individuel ; et
**en ce qu'**on prévoit au moins un dispositif (24, 25) pour le déplacement de la première et de la deuxième partie du sas individuel (11) l'une par rapport à l'autre dans ou à l'encontre de la direction de transport de la matière en forme de bande (2) lorsque la liaison est ouverte.

2. Dispositif de passage (1, 4, 5, 10) selon la revendication 1,
**caractérisé**
**en ce que** le logement du sas individuel (11) est constitué par une première paroi latérale (16) comprenant une ouverture de passage (42) pour l'entrée de la matière en forme de bande (2) dans le sas individuel, par une deuxième paroi latérale (15) comportant une ouverture de passage (41) pour la sortie de la matière en forme de bande (2) hors du sas individuel (11), et par une enveloppe faisant office de logement (20) entre la première et la deuxième paroi (15).

3. Dispositif de passage (1, 4, 5, 10) selon la revendication 2,
**caractérisé**
**en ce que** la première partie du sas individuel (11) présente au moins une partie de la première paroi latérale (16) avec l'ouverture de passage (42) pour l'entrée de la matière en forme de bande (2) ; et en ce que la deuxième partie du sas individuel (11) présente au moins une partie de la deuxième paroi latérale (15) avec l'ouverture de passage (41) pour la sortie de la matière en forme de bande (2).

4. Dispositif de passage (1, 4, 5, 10) selon la revendication 2 ou 3,
**caractérisé en ce que** la première ou la deuxième partie ou encore les deux parties du sas individuel (11, 12, 13) présentent au moins une partie de l'enveloppe faisant office de logement (20).

5. Dispositif de passage (1, 4, 5, 10) selon l'une quelconque des revendications 2 à 4,
**caractérisé**
**en ce que** le sas individuel (11, 12, 13) présente des moyens de traitement ou de transport (50) pour la matière en forme de bande, comme par exemple des rouleaux de traitement ou de transport, et des entraînements (51) pour ces moyens, les moyens ou les entraînements étant fixés à la première ou à la deuxième paroi latérale (15, 16) ou encore à l'enveloppe (20) faisant office de logement ; et
**en ce que** ces moyens et ces entraînements - de préférence en fonction de la paroi latérale (15, 16) ou de l'enveloppe (20) faisant office de logement, à laquelle ils sont fixés - sont attribués à la première ou à la deuxième partie du sas individuel (11, 12, 13) et peuvent se déplacer avec ladite partie.

6. Dispositif de passage (1, 4, 5, 10) selon l'une quelconque des revendications 2 à 5,
**caractérisé**
**en ce qu'**on raccorde une liaison tubulaire (55) depuis l'extérieur à l'enveloppe (23) faisant office de logement pour le réglage d'une pression désirée à l'intérieur du sas individuel (11) ; et en ce que la liaison tubulaire (55) - en fonction de la partie de l'enveloppe faisant office de logement, à laquelle elle est raccordée - est attribuée soit à la première, soit à la deuxième partie du sas individuel (11, 12, 13) et peut se déplacer conjointement avec celle-ci.

7. Dispositif de passage (1, 4, 5, 10) selon l'une quelconque des revendications 2 à 5,
**caractérisé**
**en ce qu'**on raccorde une liaison tubulaire (55) depuis l'extérieur de manière amovible à l'enveloppe (23) faisant office de logement pour le réglage d'une pression désirée à l'intérieur du sas individuel ; et
**en ce que** la liaison tubulaire (55), lorsqu'elle est découplée de l'enveloppe (23) faisant office de logement, peut se déplacer indépendamment de la première ou de la deuxième partie du sas individuel (11, 12, 13) en particulier dans ou à l'encontre de la direction de transport de la matière en forme de bande (2).

8. Dispositif de passage (1, 4, 5, 10) selon l'une quelconque des revendications précédentes, **caractérisé**
**en ce qu'**on prévoit un premier dispositif (24) pour le déplacement, à des fins de déplacement de la première partie du sas individuel (11, 12, 13) et on prévoit un deuxième dispositif (25) pour le déplacement, à des fins de déplacement de la deuxième partie.

9. Dispositif de passage (1, 4, 5, 10) selon l'une quelconque des revendications précédentes, **caractérisé**
**en ce que** le dispositif (24, 25) pour le déplacement est réalisé sous la forme d'un châssis mobile ou sous la forme d'un mécanisme de glissement.

10. Dispositif de passage (1, 4, 5, 10) sous la forme d'une cascade de sas comprenant une multitude de sas individuels (11, 12, 13) montés les uns derrière les autres dans la direction de transport de la matière en forme de bande (2), au moins un des sas individuels (11) étant réalisé en deux parties comprenant une première et une deuxième partie, conformément à l'une quelconque des revendications précédentes, et dans lequel les autres sas individuels (12, 13) sont raccordés à la première ou à la deuxième partie du sas individuel en deux parties (11) et, de manière correspondante, sont attribués à la première ou à la deuxième partie et peuvent se déplacer conjointement avec celle-ci.

11. Dispositif de passage (1, 4, 5, 10) selon la revendication 10,
**caractérisé**
**en ce que** deux sas individuels voisins (11, 12) présentent une paroi latérale commune (16) comportant une ouverture de passage (42) pour le transfert de la matière en forme de bande (2) d'un sas individuel (12) à l'autre.

12. Procédé pour l'ouverture d'un dispositif de passage (1, 4, 5, 10) comprenant au moins un sas individuel (11) que doit traverser une matière en forme de bande ;
**caractérisé par** les étapes suivantes consistant à :
ouvrir le sas individuel (11) par suppression d'une liaison entre une première et une deuxième partie du sas individuel ; et
déplacer la première et la deuxième partie du sas individuel (11) l'une par rapport à l'autre dans ou
à l'encontre de la direction de transport de la matière en forme de bande (2).

13. Procédé selon la revendication 12,
**caractérisé**
**en ce que** la première partie du sas individuel (11) présente au moins une partie de la première paroi latérale (16) avec l'ouverture de passage (42) pour l'entrée de la matière en forme de bande (2) ; en ce que la deuxième partie du sas individuel (11) présente au moins une partie de la deuxième paroi latérale (15) avec l'ouverture de passage (41) pour la sortie de la matière en forme de bande (2) ; et en ce qu'on déplace la première et/ou la deuxième partie du sas individuel (11, 12, 13), lors de l'ouverture et de la fermeture du sas individuel (11, 12, 13) le long de la matière en forme de bande (2), tandis que la matière en forme de bande (2) est guidée à travers les ouvertures de passage.

14. Procédé selon la revendication 12 ou 13, **caractérisé**
**en ce que** la première et la deuxième partie du sas individuel (11), une fois que les travaux d'entretien sont terminés, sont à nouveau déplacées de manière conjointe le long de la matière en forme de bande (2) et sont à nouveau reliées l'une à l'autre.
